# EUROPÄISCHE PATENTSCHRIFT

(11) **EP 2 158 493 B1**
(45) Veröffentlichungstag und Bekanntmachung des Hinweises auf die Patenterteilung: **12.01.2011**
(21) Anmeldenummer: 09753554.6
(22) Anmeldetag: 18.05.2009
(51) Int. Cl.: G01P 21/00, G01N 3/30, G01L 25/00

(54) **VERFAHREN UND VORRICHTUNG ZUR KALIBRIERUNG VON BESCHLEUNIGUNGS- UND KRAFTSENSOREN**
METHOD AND DEVICE FOR CALIBRATING ACCELERATION AND FORCE SENSORS
PROCÉDÉ ET DISPOSITIF D'ÉTALONNAGE DE CAPTEURS DE FORCE ET D'ACCÉLÉRATION

(30) Priorität: 29.05.2008 DE 102008025866
(43) Veröffentlichungstag der Anmeldung: 03.03.2010
(73) Patentinhaber: Spektra Schwingungstechnik Und Akustik Gmbh Dresden, 01217 Dresden (DE)
(72) Erfinder: BRUCKE, Martin, 01277 Dresden (DE)
(74) Vertreter: Hofmann, Klaus
(86) Internationale Anmeldenummer: PCT/DE2009/075023
(87) Internationale Veröffentlichungsnummer: WO 2009/143838

(56) Entgegenhaltungen:
- US-A- 3 830 091
- US-A- 5 000 030
- US-B2- 7 343 776

## Beschreibung

Die Erfindung betrifft ein Verfahren und eine Vorrichtung zur Anregung von Wellen in Stäben zur Kalibrierung von Beschleunigungssensoren und Kraftsensoren, insbesondere mit hohen Amplituden. Ein solcher Sensor ist ein elektromechanischer Wandler, der die mechanische Größe Beschleunigung bzw. Kraft in ein elektrisch messbares Signal, z.B. Ladung oder Spannung wandelt. Um das Übertragungsverhalten des Sensors zu ermitteln, muss eine Kalibrierung durchgeführt werden.

Zur Kalibrierung von Beschleunigungssensoren sind verschiedene Einrichtungen bekannt. Vorrichtungen und Verfahren zur Kalibrierung von Schwingungs- und Stoßaufnehmern sind in ISO 16063 beschrieben. Bei der Kalibrierung mit Beschleunigungsamplituden > 1000 m/s² müssen stoßförmige, das heißt zeitlich begrenzte Signale verwendet werden. Das allgemein bekannte Hammer-Amboss-Prinzip, das auf dem Zusammenstoß zweier Festkörper beruht, arbeitet zufriedenstellend bis zu Beschleunigungsamplituden von 5000 m/s². Um höhere Beschleunigungen, für hochwertige Kalibrierungen zu erzeugen, muss das Hopkinson-Stab-Prinzip genutzt werden. Das beschriebene Kalibrierverfahren ist in ISO 16063-13 erläutert. Zur Kalibrierung von Kraftsensoren werden üblicherweise statische Verfahren eingesetzt. Das heißt der Sensor wird mit einer statischen Gewichtskraft belastet. Die Kalibrierung von Kraftsensoren mittels zeitlich veränderlicher Signale, die mit einem Hopkinson-Stab erzeugt werden, stellt eine Neuheit dar.

Prinzipiell sind 3 verschiedene Methoden zur Kalibrierung mittels eines Hopkinson-Stabes bekannt. Diese unterschiedlichen Methoden betreffen die verwendete Referenzsensorik.

Die Beschleunigung am Stabende kann mittels eines optischen Messsystems (z.B. Laservibrometer) oder eines Referenzbeschleunigungssensors bzw. Kraftsensors gemessen werden. Eine weitere Methode zur Kalibrierung ist die Messung der Dehnung des Stabes mittels Dehnungsmessstreifen. Aus der Stabdehnung kann die Beschleunigung des Stabendes berechnet werden.

Das Hopkinson-Stab-Prinzip basiert darauf, dass sich eine mechanische Welle in einem langen schlanken Stab ausbreitet. Durch die Reflektion der Welle an einem freien Stabende entsteht eine Bewegung, welche die für die Kalibrierung der Sensoren geforderte Beschleunigung bzw. Kraft erzeugt. Durch die Eigenschaften eines langen schlanken Stabes können diese Beschleunigungen und Kräfte sehr hohe Amplituden (> 1.000.000 m/s² bzw. >100.000 N) erreichen.

Beim klassischen Hopkinson-Stab wird ein Festkörper, z.B. eine Stahlkugel, auf ein Ende des Stabes geschossen, woraus ein mechanischer Kraftstoß resultiert. Durch diesen Kraftstoß wird eine longitudinale Dehnwelle im Stab ausgelöst und kann sich entlang des Stabes fortpflanzen. Der zeitliche Verlauf der Dehnung sowie der Beschleunigungs- und Kraft-Zeit-Verlauf am Stabende ist durch den Kraft-Zeit-Verlauf des Kraftstoßes am Stabanfang definiert. Zum Beispiel regen große Stahlkugeln ein sehr schmales Frequenzspektrum an. Mit kleiner werdendem Kugeldurchmesser werden die Frequenzspektren breiter. Die Maximalamplituden nehmen jedoch mit größer werdendem Kugeldurchmesser stark zu.

Die Hauptnachteile des klassischen Hopkinson-Stabes sind:
- Die Beschleunigungssignalform ist nicht beeinflussbar.
- Die Impulsdauer der Beschleunigung ist durch die Stoßpartner vorgegeben und kann somit nur aufwändig beeinflusst werden
- Die Reproduzierbarkeit der Beschleunigungssignale und damit das Kalibrierergebnis sind durch den Verschleiß der Stoßpartner eingeschränkt
- eingeschränkter unterer Amplitudenbereich von ca. > 5.000 m/s².

In US 5 000 030 A ist ein Verfahren und ein Apparat zur Messung der dynamischen Charakteristiken eines Stoss-Accelerometers beschrieben. An einem Hopkinson-Stab befindet sich eine Referenzsensorik sowie an seinem Ende der zu kalibrierende Sensor. Die Erregung eines mechanischen Stoßes kann unter anderem auch mittels eines piezoelektrischen Elementes erfolgen. Eine gezielte Beeinflussung der Signalform, der Signalamplitude als auch der Impulsdauer der Signale erfolgt nicht.

Ein Testsystem zur Kalibrierung von Beschleunigungssensoren beschreibt US 3 830 091 A, wobei seitlich an einem Aluminiumstab montierte elektromechanische Aktoren den Stab mittels einer Steuer- und Regelelektronik in Resonanz-schwingungen versetzen und wobei an einem Ende des Stabes der zu testende Beschleunigungssensor sowie ein Referenzbeschleunigungssensor montiert ist. Bei diesem Testsystem lassen sich harmonische Beschleunigungen erzeugen. Die Frequenzen der Beschleunigung sind jedoch lediglich in ganzzahligen Vielfachen einer Grundfrequenz (z. B. 1 kHz, 2kHz, 3kHz...) einstellbar. Die erzielbare Beschleunigungsamplitude beträgt lediglich ca. 3.000m/s².

Die Aufgabe der Erfindung besteht in der Entwicklung eines Verfahrens und einer Vorrichtung zur Kalibrierung von Beschleunigungs- und Kraftsensoren mittels eines Hopkinson-Stabes, mit deren Hilfe eine gezielte Beeinflussung der Signalform, der Signalamplitude als auch der Impulsdauer der Signale über einen großen Amplitudenbereich ermöglicht wird. Die Vorrichtung soll einfach aufgebaut sein und sicher und wartungsarm funktionieren.

Erfindungsgemäß wird die Aufgabe durch die Merkmale des Verfahrensanspruches 1 sowie durch die Merkmale des Vorrichtungsanspruches 3 gelöst. Ausgestaltende Merkmale sind in den abhängigen Ansprüchen 2 und 4 bis 5 beschrieben.

Die erfindungsgemäße Vorrichtung zur Kalibrierung von Beschleunigungs- und Kraftsensoren nutzt eine an einem Hopkinson-Stab in üblicher Weise ausgebildete Referenzsensorik. Die Referenzsensorik kann ein optisches Messsystem (z.B. Laservibrometer) oder ein Referenzsensor sein. Eine weitere Methode zur Kalibrierung ist die Messung der Dehnung des Stabes mittels Dehnungsmessstreifen. Aus der Stabdehnung kann die Beschleunigung bzw. die Kraft des Stabendes berechnet werden.

Ein üblicherweise verwendeter Hopkinson-Stab ist ein etwa 2 m bis 4 m langer, etwa 18 mm bis 30 mm dicker Metallstab.

Am Ende des Hopkinson-Stabes ist der zu kalibrierende Sensor befestigt. Zur Erregung eines Beschleunigungs- oder Kraftimpulses dient ein am gegenüberliegenden Ende des Hopkinson-Stabes befestigter elektromechanischer Aktor.

Entgegengesetzt zum Hopkinson-Stab ist am elektromechanischen Aktor eine Gegenmasse befestigt, die viel kürzer als die Stablänge sein muss und eine Masse > 1/100 der Stabmasse haben muss. Diese Gegenmasse hat die Funktion 9 die Aktorkraft in den Stab einzuleiten.

Der elektromechanische Aktor ist über eine Steuerleitung mit einer Steuer- und Regelelektronik verbunden.

Der elektromechanische Aktor kann vorzugsweise ein piezoelektrischer Aktor oder auch ein magnetostriktiver Aktor sein. Ein magnetostriktiver Aktor lässt sich sehr einfach an den Stab ankoppeln, hat aber einen deutlich schlechteren wirkungsgrad als ein piezoelektrischer Aktor.

Von der Referenzsensorik kann eine Steuerleitung zur Steuer- und Regelelektronik führen.

Die Vorrichtung kann zur Kalibrierung von Kraft oder Beschleunigungssensoren verwendet werden. Um Beschleunigungssensoren zu kalibrieren, muss der Sensor am freien Stabende montiert werden. Um Kraftsensoren zu kalibrieren, muss der Sensor zuzüglich einer Ankoppelmasse am freien Stabende montiert werden.

Die Funktionsweise der erfindungsgemäßen Vorrichtung ist wie folgt:

Die beschriebenen Nachteile von bekannten Kalibrierungsverfahren mittels Hopkinson-Stäben haben die Ursache darin, dass die Welle im Stab durch einen mechanischen Kraftstoß ausgelöst wird. Die vorliegende Erfindung beruht darauf, den mechanischen Kraftstoß durch eine alternative Methode zur Anregung der Wellen im Stab zu ersetzen. Diese Methode soll ein elektrisches Ansteuersignal in einen definierten Kraftstoß wandeln. So geartete Wandler können allgemein als Aktoren bezeichnet werden. Zur Kalibrierung von Beschleunigungs- und Kraftsensoren mittels der erfindungsgemäßen Vorrichtung kommen insbesondere elektromechanische Aktoren zum Einsatz, die einen großen Kraftdynamikbereich (1 mN bis 5 kN) und einen großen nutzbaren Frequenzbereich (> 10 kHz) haben.

Eine Regelung der Beschleunigungs- bzw. Kraftimpulsform kann durch Messung der jeweiligen Größe an der Referenzsensorik erfolgen. Die Messgröße wird an eine Regelelektronik übergeben und es kann eine gezielte Vorverzerrung der Ansteuersignale des elektromechanischen Aktors erfolgen.

Wenn der Hopkinson-Stab bei seinen Längs-Eigenfrequenzen in den Zustand der Resonanz versetzt wird, erfolgt bei konstanter Erregerleistung eine Maximierung der Beschleunigungs- bzw. Kraftamplitude am Stabende. Dadurch lassen sich besonders energieeffizient große Beschleunigungs- bzw. Kraftamplituden erreichen.

Durch Überlagerung von Wellen wird die Beschleunigungs- bzw. Kraftamplitude am Ende des Stabes maximiert. Durch wiederholte Energiezufuhr in Form von erneuter Anregung des Hopkinson-Stabes mittels des elektromechanischen Aktors wird die Kraft- bzw. Beschleunigungsamplitude stufenweise erhöht.

Durch die Erfindung können die Nachteile des klassischen Kalibrierungsverfahrens mittels eines Hopkinson-Stabes behoben werden.

Die Vorteile der Erfindung bestehen darin, dass die Beschleunigungssignalform elektrisch beeinflussbar wird. Auch die Impulsdauer des Beschleunigungssignals ist elektrisch beeinflussbar. Die Erfindung ermöglicht eine Beeinflussung der Signalform (harmonische Signale, impulsförmige Signale), der Signalamplitude (typisch 20 m/s² bis 100.000 m/s²) als auch der Impulsdauer (typisch 50 us bis 500µs) der Signale.

Es entsteht praktisch kein Verschleiß, wodurch die Reproduzierbarkeit der Beschleunigungssignale und des Kalibrierergebnisses verbessert wird.

Weiterhin lassen sich als vorteilhafte Eigenschaften der Kalibriereinrichtung die Möglichkeit der einfachen Automatisierung der Kalibrierabläufe und eine energieeffizientere Arbeitsweise im Vergleich zur herkömmlichen Kalibriereinrichtung nennen.

Nachfolgend wird die Erfindung an zwei Ausführungsbeispielen näher erläutert. Es zeigen:
- Fig. 1: Kalibriervorrichtung mit Laservibrometer als Refe- renzsensorik
- Fig. 2: Kalibriervorrichtung mit Kraftsensor als Referenz- sensorik

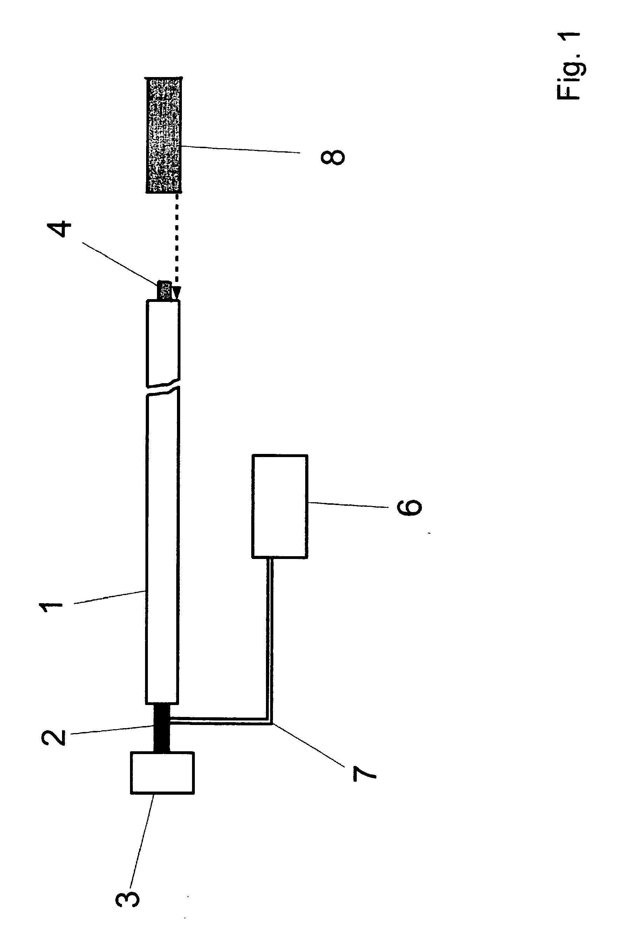

Die Fig. 1 zeigt eine Vorrichtung zur Kalibrierung von Beschleunigungssensoren. Die Vorrichtung besteht aus einem Hopkinson-Stab 1, der als metallischer zylindrischer Stab mit einer Länge von 2 m und einem Durchmesser von 20 mm ausgebildet ist. Am linken Stabanfang ist ein piezoelektrischer Aktor 2 kraftschlüssig mit dem Hopkinson-Stab 1 verbunden. Eine zylindrische metallische Gegenmasse 3 mit einem Durchmesser von 50 mm und einer Länge von 30 mm ist mit dem Aktor 2 verklebt. Am rechten Stabende ist der zu kalibrierende Sensor 4 montiert. Die Referenzsensorik 8 ist als Laser ausgeführt. Die Steuer- bzw. Regelelektronik steuert über eine Steuerleitung 7 den piezoelektrischen Aktor 2.

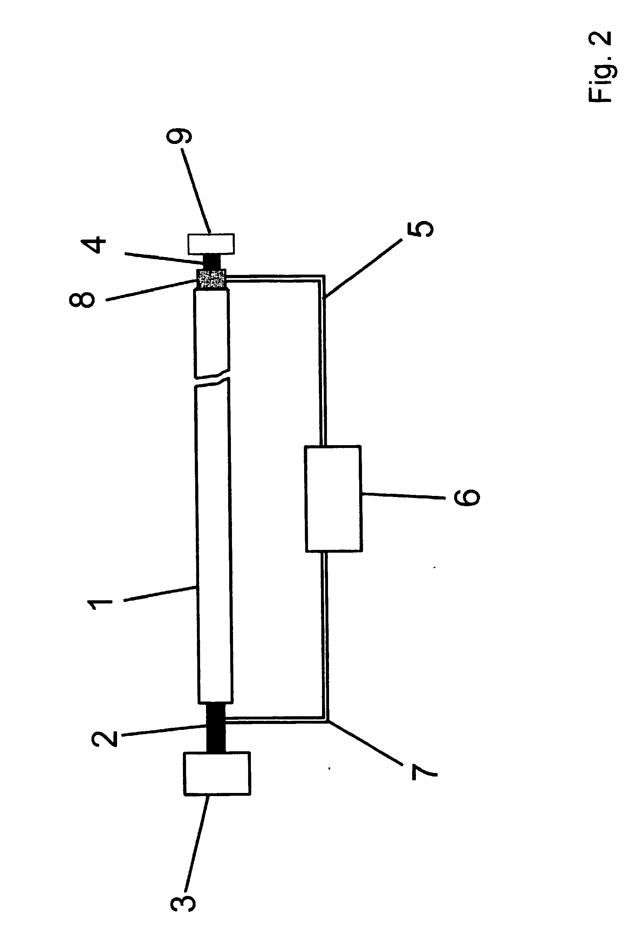

Fig. 2 beschreibt eine Vorrichtung zur Kalibrierung von Kraftsensoren. Die Vorrichtung besteht aus einem Hopkinson-Stab 1, der üblicherweise als metallischer zylindrischer Stab mit einer Länge von 2 m und einem Durchmesser von 20 mm ausgebildet ist. Am linken Stabanfang ist ein piezoelektrischer Aktor 2 kraftschlüssig mit dem Hopkinson-Stab 1 verbunden. Eine zylindrische metallische Gegenmasse 3 besitzt einen Durchmesser von 50 mm und eine Länge von 30 mm. Sie ist mit dem piezoelektrischen Aktor 2 verklebt, also stoffschlüssig verbunden. Am rechten Stabende ist der zu kalibrierende Sensor 4, der Referenzsensor 8 und die Ankoppelmasse 9 montiert. Die Steuer bzw. Regelelektronik 6 steuert über eine Steuerleitung 7 den piezoelektrischen Aktor 2.

Die Signale des zu kalibrierenden Sensors 4 und der Referenzsensorik 8 werden einer Steuer- bzw. Regelelektronik 6 zugeführt. Durch die Ansteuerung des piezoelektrischen Aktors 2 mit definierten elektrischen Signalen werden in dem Stab definierte Wellen erzeugt. Aus der Reflektion der Wellen am rechten Stabende lassen sich somit definierte Beschleunigungs-Zeit bzw. Kraft-Zeit Signale erzeugen.

Durch die Änderung der elektrischen Ansteuersignale am piezoelektrischen Aktor 2 lassen sich die Signale am rechten Stabende gezielt beeinflussen. Die Erfindung ermöglicht so sowohl eine Beeinflussung der Signalform (harmonische Signale, impulsförmige Signale), der Signalamplitude (typisch 20 m/s² bis 100.000 m/s²) als auch der Impulsdauer (typisch 50 µs bis 500µs) der Signale.

Um ein definiertes Soll-Signal am Stabende zu erzeugen, können die Ist-Signale der Referenzsensorik genutzt werden um diese mit dem Soll-Signal zu vergleichen. Mittels geeigneter mathematischer Methoden kann eine Vorverzerrung der Ansteuersignale für den Aktor berechnet werden, so dass das Soll-Signal am Stabende erzeugt wird. Dadurch lassen sich Kalibriersignale erzeugen, die auf den jeweiligen zu kalibrierenden Sensor abgestimmt sind.

Für die Erzielung von besonders hohen Signalamplituden am rechten Stabende können die Kontinuumseigenschaften des Stabes genutzt werden.

Zum einen kann der Stab in der Längs-Eigenfrequenz mit harmonischen Signalen angeregt werden. Dadurch lassen sich besonders hohe Signalamplituden am Stabende mit einem Minimum an eingebrachter elektrischer Leistung erreichen.

Zum anderen kann der Aktor mit dem gleichen Signal periodisch angesteuert werden. Wenn die Periode der Ansteuerung an die Laufzeit der Welle durch den Stab angepasst wird überlagert sich die ursprüngliche Welle mit der jeweils neu erzeugten Welle. Durch diese Überlagerung lassen sich ebenfalls besonders hohe Signalamplituden am Stabende mit einem geringen elektrischen Leistungseintrag erzielen.

### Bezugszeichenaufstellung

- 1: Stab
- 2: elektromechanischer Aktor
- 3: Gegenmasse
- 4: zu kalibrierender Sensor
- 5: Steuerleitung
- 6: Steuer- bzw. Regelelektronik
- 7: Steuerleitung
- 8: Referenzsensorik
- 9: Ankoppelmasse

## Patentansprüche

1. Verfahren zur Kalibrierung von Beschleunigungs- und Kraftsensoren mittels eines Hopkinson-Stabes (1), wobei sich am Hopkinson-Stab eine in üblicher Weise ausgebildete Referenzsensorik (8) sowie an einem Ende des Hopkinson-Stabes der zu kalibrierende Sensor (4) befinden, an dem am Sensor gegenüber liegenden Ende des Hopkinson-Stabes eine Erregung mittels eines elektromechanischen Aktors (2) zur Wandlung eines elektrischen Signals in eine mechanische Kraft erfolgt, der elektromechanische Aktor über eine Steuer elektronik ansteuerbar ist, **dadurch gekennzeichnet, dass** die Steuerelektronik auch als Regelelektronik dient und die Regelung einer Beschleunigungs- bzw. Kraftimpulsform erfolgt durch-Messung der jeweiligen Größe mittels der Referenzsensorik, Messgröße an die Steuer- und Regelelektronik-übergeben der und - eine gezielte Vorverzerrung der Ansteuersignale des elektromechanischen Aktors.

2. Verfahren nach Anspruch 1, **dadurch gekennzeichnet, dass** die Beschleunigungs- bzw. Kraftamplitude am Ende des Hopkinson-Stabes durch Überlagerung von Wellen maximiert wird.

3. Vorrichtung zur Durchführung eines Verfahrens nach Anspruch 1, wobei sich an einem Hopkinson-Stab (1) eine in üblicher Weise ausgebildete Referenzsensorik (8) sowie am Ende des Hopkinson-Stabes (1) der zu kalibrierende Sensor (4) befinden und dass an einem Ende des Hopkinson-Stabes (1) ein elektromechanischer Aktor (2) fest montiert ist, **dadurch gekennzeichnet, dass** der elektromechanische Aktor (2) über eine Steuerleitung (7) mit einer Steuer- und Regelelektronik (6) verbunden ist, dass
- am elektromechanischen Aktor (2) entgegengesetzt zum Hopkinson-Stab (1) eine Gegenmasse (3) befestigt ist, und
- dass von der Referenzsensorik (8) eine Steuerleitung (5) zur Steuer- und Regelelektronik (6) führt.

4. Vorrichtung nach Anspruch 3, **dadurch gekennzeichnet, dass** der elektromechanische Aktor (2) ein piezoelektrischer Aktor ist.

5. Vorrichtung nach Anspruch 3, **dadurch gekennzeichnet, dass** der elektromechanische Aktor (2) ein magnetostriktiver Aktor ist.

## Claims

1. Method for calibrating acceleration and force sensors by means of a Hopkinson bar (1), wherein a reference sensor system (8) designed in the normal manner is located on the Hopkinson bar and the sensor to be calibrated (4) is located at one end of the Hopkinson bar, the end of the Hopkinson bar opposite the sensor is excited by means of an electromechanical actuator (2) in order to convert an electrical signal to a mechanical force, the electromechanical actuator can be driven via open-loop control electronics (6), **characterized in that** the open-loop control electronics also serve as closed-loop control electronics and an acceleration or force pulse form is controlled by
- measuring the respective variable by means of the reference sensor system,
- transmitting the measurement variable to the open-loop and closed-loop control electronics, and
- deliberately predistorting the drive signals for the electromechanical actuator.

2. Method according to Claim 1, **characterized in that** the acceleration or force amplitude at the end of the Hopkinson bar is maximized by superimposition of waves.

3. Device for carrying out a method according to Claim 1, wherein a reference sensor system (8), which is designed in the normal manner, is located on a Hopkinson bar (1), and the sensor (4) to be calibrated is located at the end of the Hopkinson bar (1), and in that an electromechanical actuator (2) is mounted fixed to one end of the Hopkinson bar (1), **characterized in that** the electromechanical actuator (2) is connected via a control line (7) to open-loop and closed-loop control electronics (6), **in that**
- a counterweight (3) is attached to the Hopkinson bar (1) opposite the electromechanical actuator (2), and
- **in that** a control line (5) leads from the reference sensor system (8) to the open-loop and closed-loop control electronics (6).

4. Device according to Claim 3, **characterized in that** the electromechanical actuator (2) is a piezoelectric actuator.

5. Device according to Claim 3, **characterized in that** the electromechanical actuator (2) is a magnetostrictive actuator.

## Revendications

1. Procédé de calibrage de capteurs d'accélération et de force au moyen d'une barre d'Hopkinson (1), un dispositif de détection de référence (8) ayant une configuration courante se trouvant sur la barre d'Hopkinson et le capteur (4) à calibrer se trouvant à une extrémité de la barre d'Hopkinson, une excitation au moyen d'un actionneur électromécanique (2) ayant lieu à l'extrémité de la barre d'Hopkinson qui se trouve à l'opposé du capteur pour convertir un signal électrique en une force mécanique, l'actionneur électromécanique pouvant être commandé par le biais d'une électronique de commande (6), **caractérisé en ce que** l'électronique de commande sert également d'électronique de régulation et la régulation d'une forme d'impulsion d'accélération ou de force est réalisée par
- une mesure de la grandeur respective au moyen du dispositif de détection de référence,
- un transfert de la grandeur mesurée à l'électronique de commande et de régulation et
- une prédistorsion ciblée des signaux de commande de l'actionneur électromécanique.

2. Procédé selon la revendication 1, **caractérisé en ce que** l'amplitude d'accélération ou de force à l'extrémité de la barre d'Hopkinson est maximisée en superposant des ondes.

3. Dispositif pour mettre en oeuvre un procédé selon la revendication 1, un dispositif de détection de référence (8) ayant une configuration courante se trouvant sur une barre d'Hopkinson (1) et le capteur (4) à calibrer se trouvant à l'extrémité de la barre d'Hopkinson (1), et un actionneur électromécanique (2) est monté à demeure à une extrémité de la barre d'Hopkinson (1), **caractérisé en ce que** l'actionneur électromécanique (2) est relié avec une électronique de commande et de régulation (6) par le biais d'une ligne de commande (7),
- qu'un contrepoids (3) est fixé à l'actionneur électromécanique (2) à l'opposé de la barre d'Hopkinson (1) et
- qu'une ligne de commande (5) mène du dispositif de détection de référence (8) à l'électronique de commande et de régulation (6).

4. Dispositif selon la revendication 3, **caractérisé en ce que** l'actionneur électromécanique (2) est un actionneur piézoélectrique.

5. Dispositif selon la revendication 3, **caractérisé en ce que** l'actionneur électromécanique (2) est un actionneur magnétostrictif.
